# FASCICULE DE BREVET EUROPEEN

(11) **EP 3 058 135 B1**
(45) Date de publication et mention de la délivrance du brevet: **16.06.2021**
(21) Numéro de dépôt: 14786198.3
(22) Date de dépôt: 17.10.2014
(51) Int. Cl.: D21H 27/00, B32B 29/00, B42D 25/00, D21H 21/40

(54) **PROCÉDÉ DE FABRICATION D'UN DOCUMENT DE SÉCURITÉ, TEL QU'UN BILLET DE BANQUE**
VERFAHREN ZUR HERSTELLUNG EINES SICHERHEITSDOKUMENTS, Z. B. EINER BANKNOTE
METHOD FOR PRODUCING A SECURITY DOCUMENT, SUCH AS A BANK NOTE

(30) Priorité: 18.10.2013 FR 1360150
(43) Date de publication de la demande: 24.08.2016
(73) Titulaire: Banque De France, 75001 Paris (FR)
(72) Inventeur: GUTKNECHT, Dan, F-63170 Perignat les Sarlieve (FR); BARATS, Michel, F-63800 Cournon (FR)
(74) Mandataire: Regimbeau
(86) Numéro de dépôt international: PCT/EP2014/072374
(87) Numéro de publication internationale: WO 2015/055848

(56) Documents cités:
- WO-A1-2006/083033
- WO-A1-2013/182692
- US-A- 5 843 566
- US-A1- 2006 198 987
- US-A1- 2007 243 396

## Description

### DOMAINE DE L'INVENTION

L'invention concerne un procédé de fabrication d'un document de sécurité, en particulier un billet de banque.

### ETAT DE LA TECHNIQUE

On connait du document WO 98/15418 un document de sécurité, tel qu'un billet de banque, comprenant un substrat formé à partir d'une feuille en matière plastique transparente et une couche opacifiante couvrant partiellement la surface du substrat, telle qu'une couche d'encre par exemple.

Le substrat est réalisé dans un matériau plus commun (donc plus facilement accessible) que le papier fiduciaire et ne permet pas l'incorporation de certains signes de sécurité, tels que des filigranes ou des fils de sécurité.

De plus, l'encre ne migrant pas dans le substrat, l'adhésion de l'encre est amoindrie, de sorte qu'il peut être difficile d'identifier les billets de banques après une longue période de circulation.

Il existe également des billets de banque multicouche comprenant une couche de papier et deux couches en matériau polymère recouvrant les faces de la couche de papier. Ces billets de banque sont généralement fabriqués par laminage d'une bande continue de papier entre deux bandes de films polymère. Le complexe polymère/papier/polymère doit ensuite être découpé en feuilles séparées pour que les feuilles puissent ensuite être imprimées. Les billets de banques obtenus présentent une durabilité améliorée par rapport aux billets de banque imprimés sur papier fiduciaire classique.

Cependant, les impressions ne sont pas protégées par les couches en matériau polymère et sont par conséquent soumises à l'abrasion.

Par ailleurs, dans un autre domaine que celui de l'industrie fiduciaire, à savoir dans le domaine de l'industrie graphique, il existe des techniques de pelliculage permettant d'appliquer des films polymère sur des feuilles de papier séparées. A cet effet, chaque feuille est laminée avec un film polymère.

Cependant, ce type de technique ne peut être appliqué que sur des feuilles de papier présentant un grammage supérieur ou égal à 90 grammes par mètre carré, ce qui conduit à l'obtention de documents d'épaisseur relativement importante.

Pour cette raison, ce type de technique ne peut pas être appliqué à la fabrication de billets de banque. En effet, les billets de banques ne dépassent généralement pas 120 micromètres d'épaisseur, et sont généralement proches d'une épaisseur de 100 micromètres. Ces épaisseurs sont compatibles avec les techniques de traitement automatisé des billets et avec les habitudes de manipulation du public et des professionnels.

### RESUME DE L'INVENTION

Un but de l'invention est de proposer un procédé permettant de fabriquer un document de sécurité, tel qu'un billet de banque, qui soit à la fois résistant à l'abrasion et qui présente une épaisseur limitée.

Ce but est atteint dans le cadre de la présente invention grâce à un procédé de fabrication d'un document de sécurité conforme à la revendication 1.

L'étape de laminage du substrat permet de densifier le substrat avant l'étape d'application du film en matériau polymère. En effet, à grammage constant, le substrat est rendu moins épais. L'étape d'application du film peut ainsi être réalisée grâce à une technique de pelliculage feuille à feuille, telle que celles qui sont mises en œuvre dans le domaine de l'industrie graphique. Le procédé autorise ainsi la fabrication de documents de sécurité multicouche à partir d'un substrat en papier de faible grammage, ce qui permet d'obtenir des documents de sécurité de faible épaisseur.

Le procédé peut en outre comprendre une étape de :
- imprimer la ou chaque feuille de papier sur au moins une face avec une impression à l'encre, l'impression à l'encre étant ensuite recouverte par le film lors de l'application du film.

Les techniques d'impression fiduciaires à l'encre étant généralement des techniques d'impression feuille à feuille, le procédé proposé autorise de réaliser l'étape d'impression avant l'étape d'application du film. Cela permet de protéger l'impression à l'encre par le film, et ainsi d'augmenter la résistance à l'abrasion du document de sécurité.

L'étape de laminage du substrat en papier peut être réalisée par calandrage taille douce ou impression taille douce.

Lors du laminage du substrat en papier, le substrat est soumis à une pression supérieure ou égale à 5 MégaPascals. Cette pression est appliquée lors du passage du substrat en papier entre des rouleaux mis en pression.

De préférence, le laminage du substrat en papier conduit à l'obtention d'un substrat en papier présentant une épaisseur inférieure à 95 micromètres, idéalement inférieure à 80 micromètres. Ces épaisseurs sont des épaisseurs moyennes, mesurées dans des zones représentatives de l'épaisseur moyenne du billet, c'est-à-dire en dehors des zones filigranées, pouvant induire des sur- ou sous-épaisseurs, ou des zones d'impression en relief, pouvant induire des surépaisseurs.

De préférence, le laminage du substrat en papier conduit à une diminution de l'épaisseur du substrat supérieure ou égale à 10 %.

Avantageusement, le substrat en papier présente un grammage inférieur à 80 grammes par mètre carré, de préférence inférieur à 75 grammes par mètre carré.

De préférence, la ou chaque feuille de papier présente une première face et une deuxième face, opposée à la première face, et un premier film en matériau polymère est appliqué sur la première face et un deuxième film en matériau polymère est appliqué sur la deuxième face pour former une feuille multicouche polymère/papier/polymère.

Avantageusement, la feuille multicouche polymère/papier/polymère présente une épaisseur inférieure ou égale à 130 micromètres, de préférence inférieure ou égale à 120 micromètres.

Avantageusement, la feuille multicouche polymère/papier/polymère présente un grammage inférieur ou égal à 130 grammes par mètre carré, de préférence inférieur ou égal à 120 grammes par mètre carré.

Selon un premier mode de réalisation, le film présente une surface préencollée avec une couche d'adhésif, le procédé comprenant une étape de :
- laminer à chaud la ou chaque feuille de papier recouverte du film en matériau polymère, pour activer la couche d'adhésif se trouvant entre la feuille de papier et le film afin de coller le film à la feuille de papier.

La couche d'adhésif peut comprendre un polymère thermofusible, tel qu'un copolymère éthylène-acétate de vinyle (EVA) ou un polyuréthane (PU).

Selon un deuxième mode de réalisation, le procédé comprend des étapes de :
- former une couche d'adhésif à partir d'un adhésif à l'état liquide, et
- appliquer en pression la couche d'adhésif entre la feuille de papier et le film en matériau polymère lors de l'application du film.

Le procédé peut comprendre des étapes préalables de :
- dérouler une bande continue de papier à partir d'une bobine de papier,
- découper la bande en feuilles séparées, chaque feuille séparée constituant un substrat.

L'élément de sécurité peut par exemple comprendre une impression iridescente ou une bande holographique.

Le procédé peut comprendre une étape finale de :
- découper la feuille de papier, après application du film, pour former plusieurs documents de sécurité.

### PRESENTATION DES DESSINS

D'autres caractéristiques et avantage ressortiront encore de la description qui suit, laquelle est purement illustrative et non limitative et doit être lue en regard des figures annexées parmi lesquelles :
- la figure 1 est un diagramme représentant de manière schématique des étapes d'un procédé de fabrication de billets de banque, conforme à un mode de réalisation de l'invention,
- les figures 2 à 8 illustrent chacune des étapes du procédé de fabrication.

### DESCRIPTION DETAILLEE D'UN MODE DE REALISATION

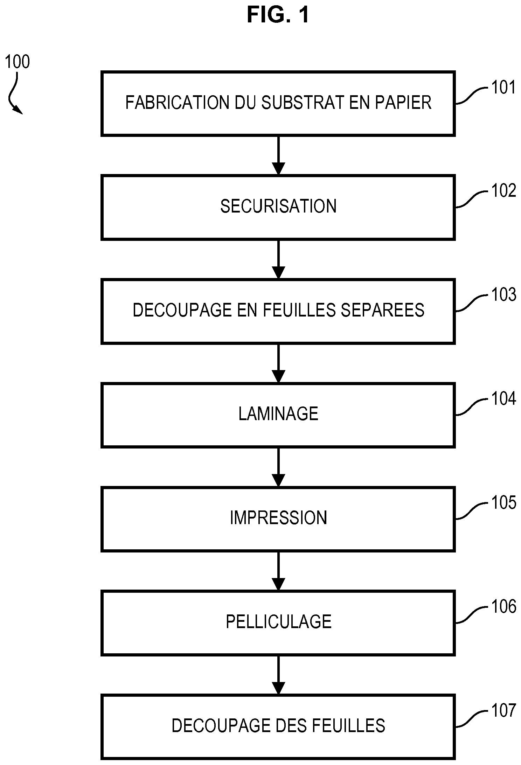

En référence à la figure 1, le procédé 100 de fabrication de billets de banque comprend les étapes suivantes.

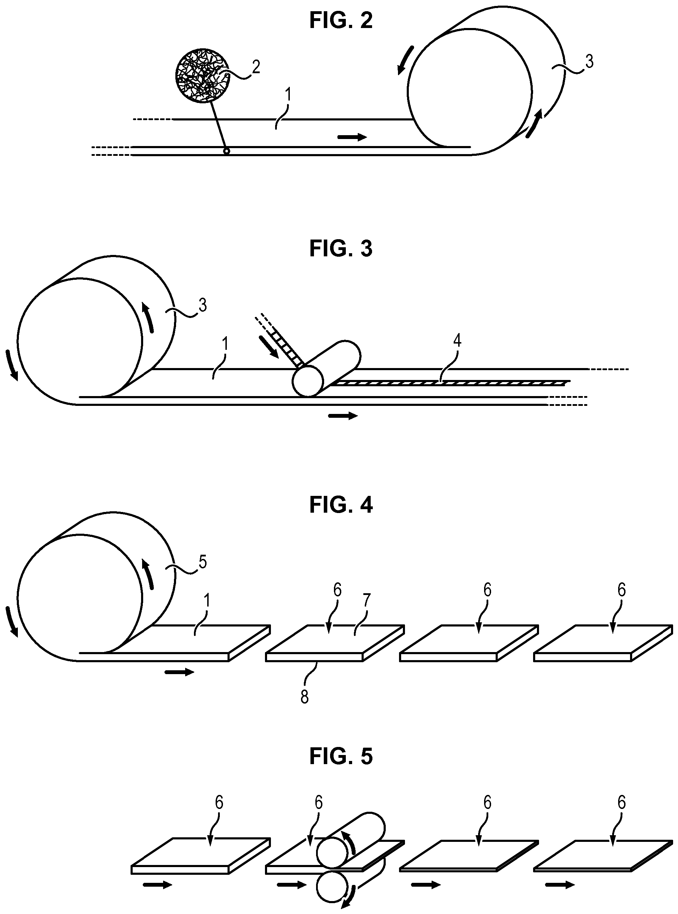

Selon une première étape 101 (étape de fabrication du substrat en papier illustrée sur la figure 2), un substrat en papier est fabriqué. Le substrat en papier se présente sous la forme d'une bande continue 1 de papier.

La bande continue de papier 1 est obtenue par égouttage d'une suspension fibreuse comprenant :
- des fibres végétales, telles que des fibres de plantes annuelles, par exemple du coton, et/ou des fibres de bois ainsi qu'éventuellement des fibres en matière synthétique,
- un ou des additif(s), tel(s) qu'un additif de résistance à l'état humide, des charges, un agent de collage en masse, des pigments, et plus généralement tout type d'additif entrant dans la composition de papier.

Cette première étape 101 inclut la formation de filigranes, l'intégration de fibres de sécurité et/ou de fils de sécurité noyé(s) ou partiellement noyés dans la feuille.

La bande de papier 1 obtenue comprend une matrice 2 de fibres. Le substrat peut en outre être imprégné en ligne par une composition favorisant l'imprimabilité et/ou la durabilité du substrat, telle qu'une composition comprenant un alcool polyvinylique. Le substrat présente un grammage inférieur ou égal à 90 grammes par mètre carré, de préférence inférieur à 80 grammes par mètre carré, avantageusement inférieur à 75 grammes par mètre carré.

La bande de papier 1 est ensuite enroulée pour former une bobine 3.

Selon une deuxième étape 102 (étape de sécurisation illustrée sur la figure 3), la bande continue de papier 1 est déroulée à partir de la bobine 3 et entrainée en défilement. Un signe de sécurité 4 est appliqué sur la bande de papier. Le signe de sécurité appliqué peut être par exemple une bande holographique ou une impression iridescente.

La bande de papier 1 est ensuite enroulée à nouveau pour former une bobine 5.

Selon une troisième étape 103 (étape de découpage en feuilles séparées illustrée sur la figure 4), la bande de papier 1 est déroulée à partir de la bobine 5 et découpée en une pluralité de feuilles de papier séparées 6. Chaque feuille de papier 6 présente une première face 7 et une deuxième face 8, opposée à la première face.

Selon une quatrième étape 104 (étape de laminage illustrée sur la figure 5), chaque feuille de papier 6 est laminée, selon une technique de laminage feuille à feuille, de manière à réduire l'épaisseur de la feuille. La feuille de papier 6 peut être laminée par calandrage taille douce ou impression taille douce.

Lors de cette quatrième étape, la feuille de papier 6 est soumise à une pression supérieure ou égale à 5 MégaPascals. Le laminage de la feuille de papier 6 conduit à une diminution de l'épaisseur de la feuille supérieure ou égale à 10 %, et à l'obtention d'une feuille de papier 6 présentant une épaisseur inférieure à 95 micromètres.

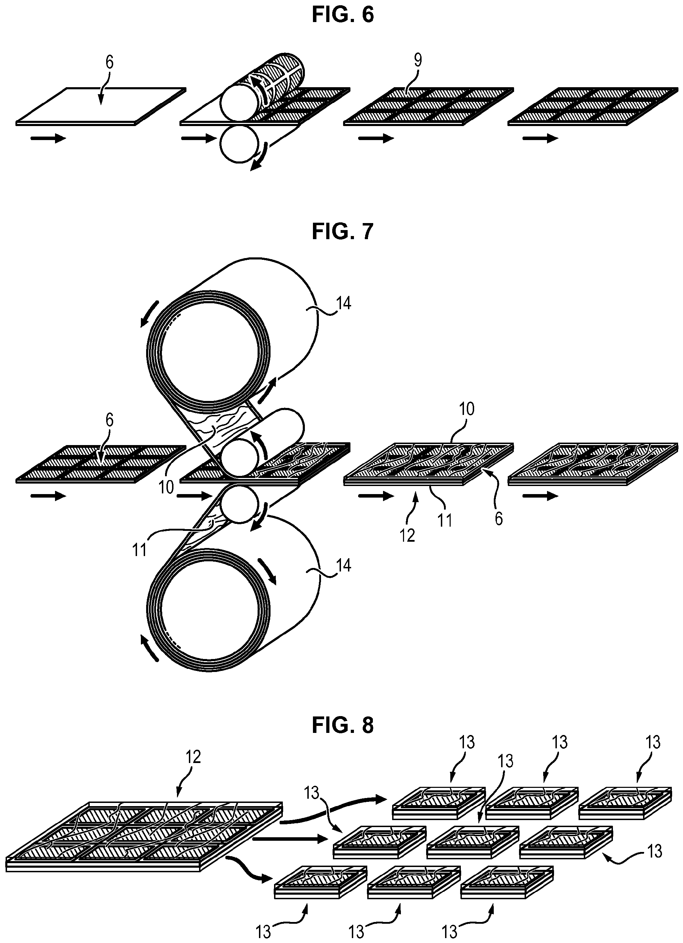

Selon une cinquième étape 105 (étape d'impression illustrée sur la figure 6), les feuilles de papier 6 sont imprimées avec une impression à l'encre 9 sur la première face 7 et sur la deuxième face 8 selon un ou plusieurs procédés d'impression feuille à feuille. Plusieurs billets de banque sont imprimés sur une même feuille de papier 6. Les techniques d'impression feuille à feuille peuvent être de type offset, sérigraphie, taille-douce, flexographie, héliographie, typographie.

On notera que les quatrième et cinquième étapes 104 et 105 peuvent être réalisées dans l'ordre inverse ou simultanément dans le cadre d'une impression taille douce (technique d'impression dans laquelle une plaque gravée puis encrée est démoulée sur le papier sous une forte pression) L'étape 105 peut également avoir lieu entre plusieurs étapes 104 d'impression.

Selon une sixième étape 106 (étape de pelliculage illustrée sur la figure 7), un premier film 10 en matériau polymère est appliqué sur la première face 7 de la feuille de papier 6 et un deuxième film 11 en matériau polymère est appliqué sur la deuxième face 8 de la feuille de papier 6.

Les films 10 et 11 sont transparents de manière à permettre à un observateur de visualiser l'impression à l'encre 9 à travers les films. Les films 10 et 11 peuvent être brillants ou mats ou comprendre à la fois des zones brillantes et des zones mates.

Le matériau polymère du premier film 10 et du deuxième film 11 peut consister en un polypropylène bi-orienté (BOPP), un polyéthylène téréphtalate (PET), un polyéthylène (PE), un polymère d'acétate de cellulose.

Le premier film 10 et le deuxième film 11 peuvent être appliqués simultanément sur un même groupe de pelliculage, en une seule passe comme illustré sur la figure 7. Alternativement, le premier film et le deuxième film peuvent être appliqués l'un après l'autre en deux passes sur deux groupes distincts de pelliculage.

Selon une première possibilité (pelliculage sec), chaque film 10, 11 présente une surface préencollée avec une couche d'adhésif.

La couche d'adhésif peut comprendre un polymère thermofusible, tel qu'un copolymère éthylène-acétate de vinyle (EVA) ou un polyuréthane (PU).

Les films 10 et 11 en matériau polymère sont appliqués sur les faces 7 et 8 de la feuille de papier 6 par pression à chaud, de manière à activer les couches d'adhésif se trouvant entre la feuille de papier 6 et chacun des films 10 et 11 afin de coller chaque film à la feuille de papier.

Les bobines de film 14 telles qu'elles sont montées sur le poste de pelliculage présentent une couche externe en matériau polymère et une couche interne d'adhésif, la couche interne d'adhésif étant destinée à coller l'interface film/papier. Lors du pelliculage, les films préencollés sont soumis à une température comprise typiquement entre 90 et 150 degrés Celsius sous une pression adaptée.

Selon une deuxième possibilité (pelliculage humide), le procédé comprend une étape additionnelle de former une couche d'adhésif à partir d'un adhésif à l'état liquide. Lors de l'application du film sur une face de la feuille de papier, la couche d'adhésif est séchée pour former un film, qui est ensuite laminé entre la feuille de papier et le film en matériau polymère.

La feuille multicouche polymère/papier/polymère 12 obtenue grâce à la sixième étape présente une épaisseur inférieure ou égale à 130 micromètres, de préférence inférieure ou égale à 120 micromètres, et un grammage inférieur ou égal à 130 grammes par mètre carré, de préférence inférieur ou égal à 120 grammes par mètre carré.

Selon une septième étape 107 (étape de découpage des feuilles illustrée sur la figure 8), chaque feuille multicouche polymère/papier/polymère 12 est découpée pour former plusieurs billets de banque individuels 13.

Chaque billet de banque 13 obtenu présente une structure multicouche polymère/papier/polymère ayant une épaisseur totale inférieure ou égale à 130 micromètres, de préférence inférieure ou égale à 120 micromètres, et un grammage inférieur ou égal à 130 grammes par mètre carré, de préférence inférieur ou égal à 120 grammes par mètre carré.

## Revendications

1. Procédé de fabrication d'un document de sécurité, tel qu'un billet de banque (13), comprenant des étapes successives de :
- laminer un substrat en papier (1, 6) présentant un grammage inférieur ou égal à 90 grammes par mètre carré de manière à réduire l'épaisseur du substrat (1, 6) et densifier le substrat (1, 6), le substrat étant une bande continue de papier (1) ou une feuille de papier (6),
- si le substrat est une bande continue de papier (1), découper le substrat (1) en une pluralité de feuilles de papier séparées (6),
- appliquer au moins un film (10, 11) en matériau polymère sur au moins une face (7, 8) de la ou de chaque feuille de papier (6),
le procédé comprenant par ailleurs :
- former des filigranes, intégrer des fibres de sécurité et/ou intégrer des fils de sécurité noyés ou partiellement noyés dans le substrat, avant de laminer le substrat, et/ou
- appliquer un élément de sécurité (4) sur la bande continue de papier (1), avant de découper la bande en feuilles séparées (6).

2. Procédé selon la revendication 1, comprenant une étape de :
- imprimer la ou chaque feuille de papier (6) sur au moins une face (7, 8) avec au moins une impression à l'encre (9), l'impression à l'encre (9) étant ensuite recouverte par le film (10, 11) lors de l'application du film (10, 11).

3. Procédé selon l'une des revendications 1 et 2, dans lequel l'étape de laminage du substrat en papier (1, 6) est réalisée par calandrage taille douce ou impression taille douce.

4. Procédé selon l'une des revendications 1 à 3, dans lequel, lors du laminage du substrat en papier (1, 6), le substrat est soumis à une pression supérieure ou égale à 5 MégaPascals.

5. Procédé selon l'une des revendications 1 à 4, dans lequel le laminage du substrat en papier (1, 6) conduit à l'obtention d'un substrat en papier présentant une épaisseur moyenne inférieure à 95 micromètres.

6. Procédé selon l'une des revendications 1 à 5, dans lequel le laminage du substrat en papier (1, 6) conduit à une diminution de l'épaisseur du substrat supérieure ou égale à 10 %.

7. Procédé selon l'une des revendications 1 à 6, dans lequel le substrat en papier (1, 6) présente un grammage inférieur à 80 grammes par mètre carré, de préférence inférieur à 75 grammes par mètre carré.

8. Procédé selon l'une des revendications 1 à 7, dans lequel la ou chaque feuille de papier (6) présente une première face (7) et une deuxième face (8), opposée à la première face, et dans lequel un premier film (10) en matériau polymère est appliqué sur la première face (7) et un deuxième film (11) en matériau polymère est appliqué sur la deuxième face (8) pour former une feuille multicouche polymère/papier/polymère (12).

9. Procédé selon la revendication 8, dans lequel la feuille multicouche polymère/papier/polymère (12) présente une épaisseur inférieure ou égale à 130 micromètres, de préférence inférieure ou égale à 120 micromètres.

10. Procédé selon l'une des revendications 8 et 9, dans lequel la feuille multicouche polymère/papier/polymère (12) présente un grammage inférieur ou égal à 130 grammes par mètre carré, de préférence inférieur ou égal à 120 grammes par mètre carré.

11. Procédé selon l'une des revendications 1 à 10, dans lequel le film (10, 11) présente une surface préencollée avec une couche d'adhésif, le procédé comprenant une étape de :
- laminer à chaud la ou chaque feuille de papier (6) recouverte du film en matériau polymère, pour activer la couche d'adhésif se trouvant entre la feuille de papier (6) et le film (10, 11) afin de coller le film à la feuille de papier.

12. Procédé selon la revendication 11, dans lequel la couche d'adhésif comprend un polymère thermofusible, tel qu'un copolymère éthylène-acétate de vinyle (EVA) ou un polyuréthane (PU).

13. Procédé selon l'une des revendications 1 à 10, comprenant des étapes de :
- former une couche d'adhésif à partir d'un adhésif à l'état liquide, et
- appliquer en pression la couche d'adhésif entre la feuille de papier (6) et le film en matériau polymère (10, 11) lors de l'application du film afin de coller le film à la feuille de papier.

14. Procédé selon l'une des revendications 1 à 13, comprenant des étapes préalables de :
- dérouler une bande continue de papier (1) à partir d'une bobine de papier (5),
- découper la bande (1) en feuilles séparées (6), chaque feuille séparée (6) constituant un substrat.

15. Procédé selon l'une des revendications 1 à 14, comprenant une étape de :
- découper la feuille de papier (6), après application du film (10, 11), pour former plusieurs documents de sécurité (13).

## Patentansprüche

1. Verfahren zur Herstellung eines Sicherheitsdokuments, wie zum Beispiel einer Banknote (13), das die folgenden aufeinanderfolgenden Schritte umfasst:
- Laminieren eines Substrats (1, 6) aus Papier, das ein Flächengewicht von kleiner oder gleich 90 Gramm pro Quadratmeter umfasst, derart dass die Dicke des Substrats (1, 6) vermindert wird und das Substrat (1, 6) verdichtet wird, wobei das Substrat ein ununterbrochenes Band (1) aus Papier oder ein Blatt (6) aus Papier ist,
- wenn das Substrat ein ununterbrochenes Band (1) aus Papier ist, Schneiden des Substrats (1) in eine Vielzahl von getrennten Papierblättern (6),
- Aufbringen mindestens eines Films (10, 11) aus Polymermaterial auf mindestens einer Fläche (7, 8) des oder jedes Papierblatts (6),
wobei das Verfahren ferner umfasst:
- vor dem Laminieren des Substrats, Bilden von Wasserzeichen, Integrieren von Sicherheitsfasern und/oder Integrieren von in dem Substrat eingelassenen oder teilweise eingelassenen Sicherheitsfäden, und/oder
- Aufbringen eines Sicherheitselements (4) auf dem ununterbrochenen Band (1) aus Papier vor dem Schneiden des Bandes in getrennte Blätter (6).

2. Verfahren nach Anspruch 1, das einen folgenden Schritt umfasst:
- Bedrucken des oder jedes Papierblatts (6) auf mindestens einer Fläche (7, 8) mit mindestens einem Farbdruck (9), wobei der Farbdruck (9) anschließend beim Auftragen des Films (10, 11) von dem Film (10, 11) bedeckt wird.

3. Verfahren nach einem der Ansprüche 1 und 2, wobei der Schritt des Laminierens des Substrats (1, 6) aus Papier durch Tiefkalandrieren oder Tiefdruck ausgeführt wird.

4. Verfahren nach einem der Ansprüche 1 bis 3, wobei beim Laminieren des Substrats (1, 6) aus Papier das Substrat einem Druck ausgesetzt wird, der höher als oder gleich 5 Megapascal ist.

5. Verfahren nach einem der Ansprüche 1 bis 4, wobei das Laminieren des Substrats (1, 6) aus Papier zum Erhalt eines Substrats aus Papier führt, das eine mittlere Dicke von kleiner als 95 Mikrometern aufweist.

6. Verfahren nach einem der Ansprüche 1 bis 5, wobei das Laminieren des Substrats (1, 6) aus Papier zu einer Verminderung der Dicke des Substrats von größer als oder gleich 10% führt.

7. Verfahren nach einem der Ansprüche 1 bis 6, wobei das Substrat (1, 6) aus Papier ein Flächengewicht von kleiner als 80 Gramm pro Quadratmeter, vorzugsweise kleiner als 75 Gramm pro Quadratmeter, aufweist.

8. Verfahren nach einem der Ansprüche 1 bis 7, wobei das oder jedes Blatt (6) aus Papier eine erste Fläche (7) und eine zweite Fläche (8) aufweist, die der ersten Fläche entgegengesetzt ist, und wobei ein erster Film (10) aus Polymermaterial auf der ersten Fläche (7) aufgebracht wird und ein zweiter Film (11) aus Polymermaterial auf der zweiten Fläche (8) aufgebracht wird, um ein mehrschichtiges Polymer/Papier/Polymer-Blatt (12) zu bilden.

9. Verfahren nach Anspruch 8, wobei das mehrschichtige Polymer/Papier/Polymer-Blatt (12) eine Dicke von kleiner oder gleich 130 Mikrometer, vorzugsweise kleiner oder gleich 120 Mikrometer, aufweist.

10. Verfahren nach Anspruch 8 und 9, wobei das mehrschichtige Polymer/Papier/Polymer-Blatt (12) ein Flächengewicht von kleiner oder gleich 130 Gramm pro Quadratmeter, vorzugsweise von kleiner oder gleich 120 Gramm pro Quadratmeter, aufweist.

11. Verfahren nach einem der Ansprüche 1 bis 10, wobei der Film (10, 11) eine mit einer Klebstoffschicht vorgekleisterte Oberfläche aufweist, wobei das Verfahren einen folgenden Schritt umfasst:
- Warmwalzen des oder jedes Blatts (6) aus Papier, das mit dem Film aus Polymermaterial bedeckt ist, zum Aktivieren der Klebstoffschicht, die sich zwischen dem Blatt (6) aus Papier und dem Film (10, 11) befindet, um den Film an das Blatt aus Papier zu kleben.

12. Verfahren nach Anspruch 11, wobei die Klebstoffschicht ein heißschmelzendes Polymer umfasst, wie beispielsweise ein Ethylen-Vinylacetat-Copolymer (EVA) oder ein Polyurethan (PU).

13. Verfahren nach einem der Ansprüche 1 bis 10, das die folgenden Schritte umfasst:
- Bilden einer Klebstoffschicht ausgehend von einem Klebstoff im flüssigen Zustand, und
- Aufbringen der Klebstoffschicht unter Druck zwischen dem Blatt (6) aus Papier und dem Film (10, 11) aus Polymermaterial beim Aufbringen des Films, um den Film an das Blatt aus Papier zu kleben.

14. Verfahren nach einem der Ansprüche 1 bis 13, das die folgenden vorangehenden Schritte umfasst:
- Abrollen eines ununterbrochenen Bandes (1) aus Papier ausgehend von einer Papierrolle (5),
- Schneiden des Bandes (1) in getrennte Blätter (6), wobei jedes getrennte Blatt (6) ein Substrat bildet.

15. Verfahren nach einem der Ansprüche 1 bis 14, das einen folgenden Schritt umfasst:
- Schneiden des Blatts (6) aus Papier nach dem Aufbringen des Films (10, 11), um mehrere Sicherheitsdokumente (13) zu bilden.

## Claims

1. A process for manufacturing a security document, such as a banknote (13), comprising the successive steps of:
- rolling a paper substrate (1, 6) having a grammage less than or equal to 90 grams per square meter so as to reduce the thickness of the substrate (1, 6) and densify the substrate (1, 6), the substrate being a continuous paper web (1) or a paper sheet (6),
- if the substrate is a continuous paper web (1), cutting the substrate (1) into a plurality of separate paper sheets (6),
- applying at least one film (10, 11) of polymeric material to at least one side (7, 8) of the or each paper sheet (6),
the process further comprising:
- forming watermarks, embedding security fibers and/or embedding security threads embedded or partially embedded in the substrate, before rolling the substrate, and/or
- applying a security element (4) to the continuous paper web (1), before cutting the web into separate sheets (6).

2. The process as claimed in claim 1, comprising a step of:
- printing the or each paper sheet (6) on at least one side (7, 8) with at least one ink print (9), the ink print (9) then being covered by the film (10, 11) when applying the film (10, 11).

3. The process as claimed in one of claims 1 and 2, wherein the step of rolling the paper substrate (1, 6) is performed by intaglio calendering or intaglio printing.

4. The process as claimed in one of claims 1 to 3, wherein, when rolling the paper substrate (1, 6), the substrate is subjected to a pressure greater than or equal to 5 megapascals.

5. The process as claimed in one of claims 1 to 4, wherein rolling the paper substrate (1, 6) results in a paper substrate having an average thickness of less than 95 micrometers.

6. The process as claimed in one of claims 1 to 5, wherein rolling the paper substrate (1, 6) leads to a decrease in the thickness of the substrate greater than or equal to 10%.

7. The process as claimed in one of claims 1 to 6, wherein the paper substrate (1,6) has a grammage of less than 80 grams per square meter, preferably less than 75 grams per square meter.

8. The process as claimed in one of claims 1 to 7, wherein the or each paper sheet (6) has a first side (7) and a second side (8), opposite the first side, and wherein a first film (10) of polymeric material is applied to the first side (7) and a second film (11) of polymeric material is applied to the second side (8) to form a polymer/paper/polymer multilayer sheet (12).

9. The process as claimed in claim 8, wherein the polymer/paper/polymer multilayer sheet (12) has a thickness of less than or equal to 130 micrometers, preferably less than or equal to 120 micrometers.

10. The process as claimed in one of claims 8 and 9, wherein the polymer/paper/polymer multilayer sheet (12) has a grammage less than or equal to 130 grams per square meter, preferably less than or equal to 120 grams per square meter.

11. The process as claimed in one of claims 1 to 10, wherein the film (10, 11) has a surface pre-glued with a layer of adhesive, the process comprising a step of:
- heat rolling the or each paper sheet (6) covered with the film of polymeric material, to activate the layer of adhesive located between the paper sheet (6) and the film (10, 11) in order to bond the film to the paper sheet.

12. The process as claimed in claim 11, wherein the layer of adhesive comprises a hot melt polymer, such as an ethylene-vinyl acetate (EVA) copolymer or a polyurethane (PU).

13. The process as claimed in one of claims 1 to 10, comprising the steps of:
- forming a layer of adhesive from an adhesive in a liquid state, and
- applying pressure to the layer of adhesive between the paper sheet (6) and the film of polymeric (10, 11) when applying the film in order to bond the film to the paper sheet.

14. The process as claimed in one of claims 1 to 13, comprising preliminary steps of:
- unwinding a continuous paper web (1) from a paper reel (5),
- cutting the web (1) into separate sheets (6), each separate sheet (6) constituting a substrate.

15. The process as claimed in one of claims 1 to 14, comprising a step of:
- cutting the paper sheet (6), after applying the film (10, 11), to form several security documents (13).
